# EUROPÄISCHE PATENTSCHRIFT

(11) **EP 4 253 656 B1**
(45) Veröffentlichungstag und Bekanntmachung des Hinweises auf die Patenterteilung: **04.12.2024**
(21) Anmeldenummer: 22164924.7
(22) Anmeldetag: 29.03.2022
(51) Int. Cl.: E01C 19/48, B60H 1/00, B60H 1/24

(54) **BEDIENEINHEIT MIT FRISCHLUFTEINRICHTUNG**
CONTROL UNIT WITH FRESH AIR DEVICE
UNITÉ DE COMMANDE AVEC DISPOSITIF D'AIR FRAIS

(43) Veröffentlichungstag der Anmeldung: 04.10.2023
(73) Patentinhaber: Joseph Vögele AG, 67067 Ludwigshafen (DE)
(72) Erfinder: Oettinger, Klaus, 68804 Altlußheim (DE); Fleischer, Bastian, 68753 Waghäusel (DE)
(74) Vertreter: Grünecker Patent- und Rechtsanwälte PartG mbB

(56) Entgegenhaltungen:
- WO-A1-2017/209663
- KR-A- 20200 049 083
- US-A1- 2020 079 175
- US-B1- 6 290 286

## Beschreibung

Die vorliegende Erfindung betrifft eine Bedieneinheit einer Straßenbaumaschine gemäß dem Anspruch 1.

Während des Betriebs einer Straßenbaumaschine, insbesondere während einer Einbaufahrt eines Straßenfertigers oder eines dem Straßenfertiger vorausfahrenden Beschickerfahrzeugs, welches den Straßenfertiger mit einem Einbaumaterial versorgt, können in unmittelbarer Umgebung am Straßenfertiger oder am Beschickerfahrzeug Dämpfe und bitumenhaltige Aerosole entstehen. Deren Entstehung kann insbesondere dann hervorgerufen werden, wenn heißes Einbaumaterial gefördert, verteilt oder eingebaut wird.

EP 0 843 044 A1 offenbart einen Straßenfertiger sowie einen Beschicker mit einem Absaugsystem, welches dazu ausgebildet ist, aus einem Bereich oberhalb der vor der Einbaubohle positionierten Verteilerschnecke Dämpfe und Aerosole abzusaugen und diese oberhalb des Fahrerschutzdaches einer Fahrerbedienplattform auszustoßen.

DE 10 2012 007 869 A1 offenbart ebenfalls einen Straßenfertiger mit einer Absaugeinrichtung, mittels welcher sich Dämpfe und Aerosole entlang einer Längstransportrichtung für Einbaugut, die unterhalb des Fahrerbedienstands innerhalb des Chassis verläuft, absaugen und in ein Abgasausstoßsystem einleiten lassen.

JP 2014-139 388 A offenbart ein weiteres Absaugsystem, das dazu ausgebildet ist, aus einem Bereich des Querverteilers, der das Einbaugut vor der Einbaubohle seitwärts verteilt, abzusaugen und oberhalb eines Fahrerbedienbereichs auszustoßen.

Die vorangehenden Absaugeinrichtungen sind dazu ausgebildet, an Straßenfertigern oder Beschickerfahrzeugen Dämpfe und/oder Aerosole am Ort ihrer Entstehung abzusaugen und oberhalb eines Dachaufbaus bzw. oberhalb einer für den Fahrer errichteten Bedienplattform auszustoßen. Nachteilig daran ist, dass die Leistung dieser Absaugsysteme erfahrungsgemäß nicht vollends ausreicht, um zu verhindern, dass Dämpfe und/oder Aerosole in den Bedienbereich des Fahrers oder in andere am Straßenfertiger oder Beschicker vorgesehene Bedienbereiche, in denen ein Fahrer oder eine Bedienperson arbeiten soll, eindringen.

DE 10 2020 123 723 A1 offenbart einen Straßenfertiger, der in Fertigungsrichtung betrachtet vor der Einbaubohle mindestens eine Luftdüseneinheit zum Erzeugen eines vertikalen und/oder eines horizontalen Luftschleiers aufweist, wobei der mittels der Luftdüseneinheit hergestellte Luftschleier den Bereich zwischen einem ersten Seitenschild und einem zweiten Seitenschild der Einbaubohle eingrenzt, so dass Dämpfe des Einbaumaterials durch eine Absaugeinrichtung besser aus diesem Bereich absaugbar sind. Ein solcher Luftschleier hat die gleiche technische Wirkung wie eine horizontale bzw. vertikale Abdeckung um den Bereich der Verteilerschnecke herum.

Ferner offenbart DE 10 2020 123 723 A1 eine Luftdüseneinheit, die an einem Bedienstand des Straßenfertigers angeordnet ist, um einen Luftschleier um den Bedienstand herum zu erzeugen, so dass Dämpfe nicht in den Bereich des Bedienstands gelangen können. Eine derartige Abschottungseinrichtung ist jedoch in konstruktiver Hinsicht mit einem hohen Aufwand verbunden.

US 6,290,286 B1 offenbart eine Frischluftleitung in einer Fahrzeugkabine, wobei die Frischluftleitung einen am Boden befestigten, biegbaren Leitungsabschnitt aufweist, der mit einem am Kabinenaufbau befestigten, eine Auslassöffnung für Frischluft aufweisenden Leitungsabschnitt verbindbar ist.

EP 3 463 947 B1 offenbart eine Frischluftdüse im Bereich eines Lenkrads, die von einer relativ dünn ausgebildeten Frischluftleitung mit Frischluft versorgt wird.

KR 2020 0049083 A offenbart einen in einer Instrumententafel eines Fahrzeugs integrierten Lüftungsschlitz.

US 2020/0079175 A1 offenbart eine Fahrzeugkabine mit einem im Kabinenaufbau integrierten Belüftungssystem.

Aufgabe der Erfindung ist es, einen Bediener zielgerichtet mit Frischluft versorgen zu können.

Diese Aufgabe wird gelöst durch eine Bedieneinheit gemäß Anspruch 1. Vorteilhafte Weiterbildungen der Erfindung sind durch die technischen Merkmale der Unteransprüche gegeben.

Die Erfindung betrifft eine Bedieneinheit zum Steuern und Überwachen verschiedener Prozesse einer Straßenbaumaschine, die insbesondere als Straßenfertiger oder als Beschickerfahrzeug konfiguriert ist, umfassend eine Frischlufteinrichtung, die lösbar an der Bedieneinheit befestigt ist. Die Frischlufteinrichtung weist mindestens ein Element mit wenigstens einer Auslassöffnung für Frischluft und mindestens eine Halterung für das Element auf. Erfindungsgemäß ist das Element mittels der Halterung in verschiedene Positionen relativ zu der Bedieneinheit verstellbar. Damit kann ein Bediener für sich die durch das Element erzeugte Frischluftzufuhr individuell einstellen. Vor allem lässt sich dadurch das Element bezüglich Mund und Nase des Bedieners so positionieren, dass dieser zielgerichtet mit Frischluft versorgt wird.

Vorzugsweise ist die Halterung werkzeuglos und/oder manuell durch den Bediener verstellbar. Dadurch ergibt sich eine einfache Handhabe für den Bediener, um die Frischluftzufuhr schnell auf sich einzustellen.

Vorteilhaft ist es, wenn die Halterung mindestens eine mit dem Element verbundene Frischluftleitung aufweist. Diese Frischluftleitung könnte beispielsweise durch einen flexiblen Schlauch ausgebildet sein, der zumindest abschnittsweise im Inneren der Halterung verläuft.

Eine kostengünstige Variante sieht vor, dass die Halterung zumindest abschnittsweise als Schwanenhalshalterung oder als Gelenkschlauchhalterung ausgebildet ist. Solche Halterungen lassen sich vom Bediener schnell und frei verstellen, um die Frischluftzufuhr individuell einzustellen.

Eine Variante sieht vor, dass die Halterung mindestens einen Schwenkarm umfasst. Vorstellbar ist es, dass das Element eine an einem verstellbaren Ende des Schwenkarms befestigte, röhrenförmige Luftleiste ist, die auf den Bediener zu bzw. von diesem weg geschwenkt werden kann. Eine Verstellbarkeit der Frischluftzufuhr könnte dadurch verbessert werden, dass die Halterung mittels eines Kugelgelenks mit dem Element verbunden ist. Vorstellbar wäre es, dass das Kugelgelenk selbst einen Abschnitt der zum Element hinführenden Frischluftleitung ausbildet oder aufnimmt.
Gemäß einer insbesondere bei Nachtarbeiten vorteilhaften Ausführungsform der Erfindung weisen das Element und/oder die Halterung mindestens eine Lichtquelle auf. Diese Lichtquelle kann zum Anzeigen einer Positionierung des Elements und/oder zum Anzeigen einer Einstellung der Halterung verwendet werden. Eine besonders bevorzugte Variante sieht vor, dass die Lichtquelle hinsichtlich einer im Bereich der Bedieneinheit, insbesondere im Bereich der Halterung und/oder im Bereich des Elements, gemessenen Luftqualität verschiedene Farben aussendet, um den Bediener darauf optisch hinzuweisen.

Vorzugsweise umfasst die Frischlufteinrichtung mindestens eine Sensoreinheit, beispielsweise eine Kohlenwasserstoffsensoreinheit, die dazu ausgebildet ist, die Luftqualität der dem Fahrer oder dem Bediener zugeführten Frischluft zu messen. Es ist möglich, dass die Sensoreinheit dazu konfiguriert ist, ihre Messdaten mittels Nahfeldkommunikation (NFC) oder mittels Bluetooth an eine in der Bedieneinheit verbaute Steuereinrichtung zu senden. Die Steuereinrichtung kann dazu ausgebildet sein, diese empfangenen Messdaten mittels einer mit ihr funktional verbundenen Anzeigevorrichtung, insbesondere auf einem Display der Bedieneinheit, anzuzeigen.

Denkbar wäre es, dass die hinsichtlich der Frischluftqualität erfassten Messdaten von der Steuereinrichtung, ggf. zu einem Messdatenprotokoll zusammengefasst, einem online eingerichteten Baustellenüberwachungsmanagementsystem zur Verfügung gestellt werden. Damit lassen sich von extern aus, d.h. über Baustellenüberwachungsmanagementsystem, Servicearbeiten auf der Baustelle, beispielsweise der Austausch einer Filtereinheit der Frischlufteinrichtung, koordinieren.

Eine Variante sieht vor, dass die Sensoreinheit integraler Bestandteil einer personengetragenen Einheit ist, insbesondere integraler Bestandteil eines vom Fahrer oder Bediener getragenen Headsets, einer vom Fahrer oder Bediener getragenen VR-Brille und/oder einer vom Fahrer oder Bediener getragenen Smart Watch ist. Alternativ dazu oder ergänzend kann die Bedieneinheit selbst die Sensoreinheit aufweisen und/oder die Sensoreinheit ist als ein eigenständiges Modul am Aufbau des (Fahrer-)Bedienstands befestigt.

Vorstellbar ist es, dass die Lichtquelle über das Element und/oder die Halterung, beispielsweise mittels einer darin verlegten Leitung, mit Strom versorgt wird. Alternativ dazu kann die Lichtquelle batteriebetrieben sein.

Vorzugsweise ist das Element als Düse und/oder als Diffusor ausgebildet. Als Düse kann das Element dem Mund und/oder der Nase des Bedieners zielgerichtet Frischluft zuführen. Die damit erzeugte Frischluftströmung weist eine hohe Geschwindigkeit auf. Als Diffusor könnte das Element den kompletten Gesichtsbereich des Bedieners mit Frischluft versorgen. Vorstellbar ist es, dass das Element sowohl als Düse als auch als Diffusor einstellbar ist. Ob das Element als Düse oder als Diffusor genutzt wird, kann der Bediener selbst am Element einstellen. Vorstellbar wäre hierfür eine Drehverstellmechanik, anhand dessen sich eine Weite der Auslassöffnung stufenlos einstellen lässt.

Eine bevorzugte Variante sieht vor, dass die Frischlufteinrichtung mindestens eine Kühl- und/oder eine Luftbefeuchtungseinheit aufweist. Diese Varianten bieten insbesondere eine Komfortfunktion für Arbeiten, die an heißen Sommertagen stattfinden. Eine weitere Komfortfunktion kann dadurch vorliegen, dass die mittels der Frischluftvorrichtung transportierte Frischluft aktiv oder passiv erwärmbar ist. Eine passive Erwärmung der Frischluft könnte dadurch geschehen, dass die Frischlufteinrichtung zumindest abschnittsweise mittels Motorabluft innerhalb des Motorraums umströmt und dadurch die darin geförderte Frischluft erwärmbar ist. Nützlich wäre für diese Wärmeübertragung, wenn der umströmte Abschnitt aus einem wärmeleitfähigen Material ausgebildet ist.

Besonders vorteilhaft ist es, wenn die Frischlufteinrichtung mindestens eine Filtereinheit und/oder eine Desodoriereinheit aufweist. Die Filtereinheit könnte eingangs der Frischlufteinrichtung, vor allem an einem Ort geringer Dampfentwicklung, beispielsweise seitlich oder unterhalb des Fahrerbedienstands, positioniert sein. Die Desodoriereinheit könnte ausgangs der Frischlufteinrichtung, d.h. unmittelbar in der Nähe des Fahrers oder Bedieners. Als Desodoriereinheit käme eine Duftkapsel in Frage, die vom Bediener im Bereich der Auslassöffnung, beispielsweise an das verstellbare Element, befestigbar ist.

Gemäß einer vorteilhaften Ausführungsform der Erfindung liegt die Frischlufteinrichtung als Nachrüstset für die Bedieneinheit vor. Die Frischlufteinrichtung liegt hier als Anbaumodul vor, das sich vom Bediener an der Bedieneinheit anschließen lässt. Dafür könnte die Halterung der Frischlufteinrichtung eine Schnellmontagekupplung aufweisen, mittels welcher die Halterung direkt an der Bedieneinheit der Straßenbaumaschine oder zumindest im Bereich der Bedieneinheit, vorzugsweise an einer die Bedieneinheit tragenden Konsole, anbaubar ist. Insbesondere weist die Halterung dafür einen Druckluftanschlussstecker auf, der mit einem an der Bedieneinheit ausgebildeten oder in dessen Nähe positionierten Druckluftanschluss verbindbar ist.

Vorzugsweise umfasst die Frischlufteinrichtung einen Drucklufterzeuger. Der Drucklufterzeuger kann als Pneumatikpumpe bzw. Kompressor konfiguriert sein. Dieser Drucklufterzeuger kann ggf. auch für andere am (Fahrer-) Bedienstand ausgebildete Einstell- und/oder Belüftungsfunktionen eingesetzt werden, wäre also ohnehin verfügbar.

Vorstellbar wäre es, dass die Frischlufteinrichtung als ein autarkes, zur Frischlufterzeugung und -versorgung ausgebildetes Modul ausgebildet ist. Ein solches Modul könnte ein eigenes Gehäuse aufweisen, das, vorzugsweise mittels Schnellkupplung, neben der Bedieneinheit positionierbar ist. Gemäß einer Variante lässt sich diese modulare Frischlufteinrichtung an einer Seite Bedieneinheit befestigen, beispielsweise an einer daran ausgebildeten Führung aufschieben.

Alternativ dazu wäre es vorstellbar, dass die Frischlufteinrichtung mit bereits an der Bedieneinheit vorgesehenen Komponenten kompatibel, sprich damit funktional verbindbar ist, beispielsweise von einem in der Bedieneinheit integrierten Drucklufterzeuger mit Frischluft versorgt wird, wenn sie an der Bedieneinheit befestigt ist.

Vorzugsweise bildet die Frischlufteinrichtung ein Ansteckmodul an der Bedieneinheit aus, das insbesondere an einer Eingabeoberfläche der Bedieneinheit montierbar ist. Dafür kann die Eingabeoberfläche der Bedieneinheit einen mit der Frischlufteinrichtung kompatiblen Druckluftanschluss aufweisen.

Vorteilhaft ist es, wenn die Bedieneinheit eine von der Frischlufteinrichtung gesondert ausgebildete Gebläseeinrichtung aufweist. Diese Gebläseeinrichtung kann der Bediener insbesondere als Klimaeinrichtung nutzen, sprich zur Temperierung seines Arbeitsplatzes einsetzen, während sich die mittels der Frischlufteinrichtung erzeugte Frischluftströmung gezielt in Richtung von Mund und Nase des Fahrers oder Bedieners richten lässt.

Ferner betrifft die Erfindung eine Straßenbaumaschine, insbesondere einen Straßenfertiger oder einen Beschicker für einen Straßenfertiger, wobei die Straßenbaumaschine mindestens eine Bedieneinheit gemäß einer der vorangehend beschriebenen Ausführungen aufweist.

An einem Straßenfertiger könnte die erfindungsgemäße Bedieneinheit am Fahrerbedienstand und/oder im Bereich des Außenbedienstands der Einbaubohle vorgesehen sein.

Vorteilhafte Ausführungsbeispiele der Erfindung werden anhand der Figuren genauer erläutert. Es zeigen
- Fig. 1: eine Straßenbaumaschine in Form eines Straßenfertigers,
- Fig. 2: eine Straßenbaumaschine in Form eines Beschickerfahrzeugs für einen Straßenfertiger,
- Fig. 3: eine schematische Darstellung einer Frischlufteinrichtung in isolierter Darstellung,
- Fig. 4: eine schematische Darstellung einer Fahrer-Bedieneinheit mit einer daran montierten Frischlufteinrichtung,
- Fig. 5A: eine schematische Darstellung einer Frischlufteinrichtung mit einer Schwanenhalshalterung,
- Fig. 5B: eine schematische Darstellung einer Frischlufteinrichtung mit einer Gelenkschlauchhalterung, und
- Fig. 5C: eine schematische Darstellung einer Frischlufteinrichtung mit einer Schwenkarmhalterung.

Gleiche Komponenten sind in den Figuren durchgängig mit gleichen Bezugszeichen versehen.

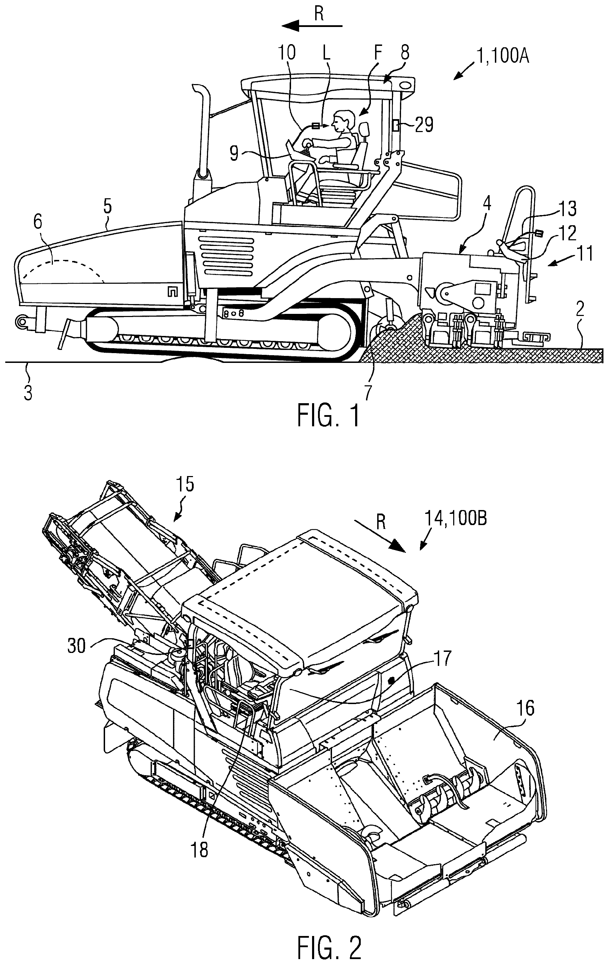

Fig. 1 zeigt eine Straßenbaumaschine 100A, die in Form eines Straßenfertigers 1 ausgebildet ist. Der Straßenfertiger 1 ist zum Herstellen einer Einbauschicht 2 auf einem Untergrund 3 ausgebildet. Dafür ist der Straßenfertiger 1 mit einer Einbaubohle 4 ausgestattet. In Einbaurichtung R vorne am Straßenfertiger 1 ist ein Gutbunker 5 zur Bevorratung von Einbaumaterial 6 vorgesehen. Das Einbaumaterial 6 kann mittels einer nicht gezeigten Längsfördereinrichtung entgegen der Einbaurichtung R aus dem Gutbunker 5 heraus zur Einbaubohle 4 hin transportiert und vor dieser mittels eines Querverteilers 7 ausgebreitet werden.

Der Straßenfertiger 1 aus Fig. 1 verfügt über einen Fahrerbedienstand 8. Der Fahrerbedienstand 8 ist vorzugsweise als offener Bedienstand für den Fahrer F des Straßenfertigers 1 ausgebildet und weist eine Bedieneinheit 9 für den Fahrer auf. Mittels der Bedieneinheit 9 kann vom Fahrer F als Eingabeeinrichtung genutzt werden, um den Straßenfertiger 1 zu lenken und daran ablaufende Prozesse zu steuern und zu überwachen. Die am Fahrerbedienstand 8 vorgesehene Bedieneinheit 9 weist eine Frischlufteinrichtung 10 auf, die dazu ausgebildet ist, den Fahrer F mit Frischluft L zu versorgen. Die Frischluft L gelangt als Strömung direkt ins Gesicht des Fahrers F, wodurch die Qualität der vom Fahrer F eingeatmeten Luft verbessert wird.

Ferner zeigt Fig. 1, dass die Einbaubohle 4 des Straßenfertigers 1 einen Außenbedienstand 11 mit einer daran befestigten Bedieneinheit 12 aufweist. Eine solche Bedieneinheit kann auch auf der anderen Seite der Einbaubohle 4 vorliegen. An der Bedieneinheit 12 ist eine Frischlufteinrichtung 13 vorgesehen, die dazu konfiguriert ist, einen am Außenbedienstand 11 arbeitenden Bediener mit Frischluft L zu versorgen.

Fig. 2 zeigt eine Straßenbaumaschine 100B, die in Form eines Beschickerfahrzeugs 14 vorliegt. Das Beschickerfahrzeug 14 ist dazu konfiguriert, in Einbaurichtung R dem Straßenfertiger 1 aus Fig. 1 vorauszufahren und diesen mit Einbaumaterial 6 zu versorgen. Dafür weist das Beschickerfahrzeug 14 eine Fördereinrichtung 15 auf, die am Beschickerfahrzeug 14 aus einem daran installierten Gutbunker 16 das Einbaumaterial 6 erhält und in den Gutbunker 5 des Straßenfertigers 1 abwirft.

Das Beschickerfahrzeug 14 verfügt über einen Fahrerbedienstand 17 mit einer Bedieneinheit 18 für einen Fahrer des Beschickerfahrzeugs 14. Die Bedieneinheit 18 des Beschickerfahrzeugs 14 kann eine vergleichbare Frischlufteinrichtung wie die Frischlufteinrichtung 10 des Stra-βenfertigers 1 aufweisen, mit welcher dem Fahrer des Beschickerfahrzeugs 14 Frischluft L zielgerichtet im Bereich seiner Einatmung zugeführt wird.

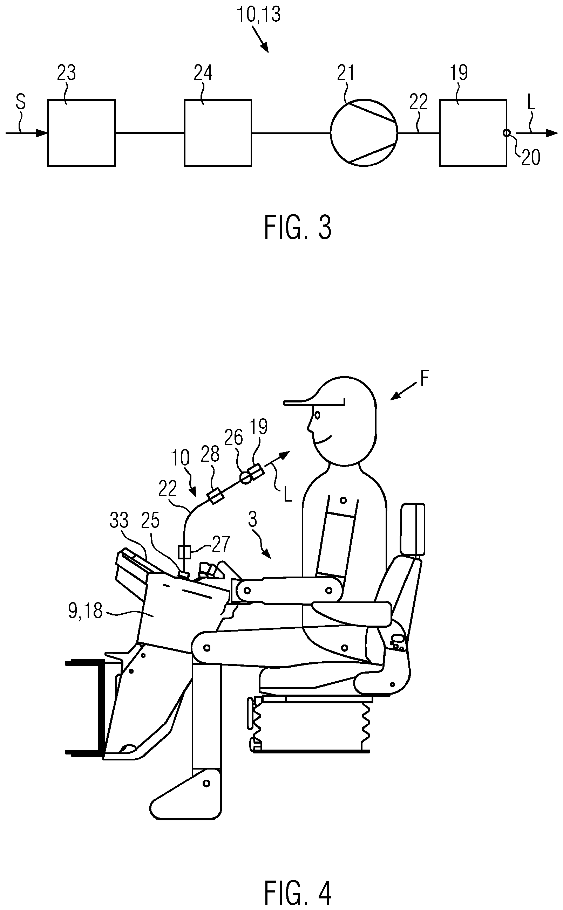

Fig. 3 zeigt in schematischer Darstellung die Frischlufteinrichtung 10, 13 der Bedieneinheit 9, 12, 18. Die Frischlufteinrichtung 10, 13 weist ein Element 19 mit einer Auslassöffnung 20 für die Frischluft L auf. Das Element 19 liegt als Düse vor, so dass die Frischluft L mit einer hohen Strömungsgeschwindigkeit in Richtung des Fahrers F oder des Bedieners strömt. Alternativ dazu oder des Weiteren könnte das Element 19 als Diffusor ausgebildet sein, um eine größere Fläche des Gesichts mit Frischluft L zu versorgen.

Die Frischlufteinrichtung 10, 13 aus Fig. 3 weist einen Druckerzeuger 21 auf, der mittels einer Halterung 22 mit dem Element 19 verbunden ist. Ferner verfügt die Frischlufteinrichtung 10, 13 aus Fig. 3 über eine Filtereinheit 23, die zum Reinigen einer angesaugten Luftströmung S ausgebildet ist. Eine Kühl- und/oder Luftbefeuchtungseinheit 24 der in Fig. 3 gezeigten Frischlufteinrichtung 10, 13 ist zur Vorbehandlung der Frischluft L vorgesehen.

Fig. 4 zeigt die Bedieneinheit 9 am Fahrerbedienstand 8 des Straßenfertigers 1 bzw. die Bedieneinheit 18 am Fahrerbedienstand 17 des Beschickerfahrzeugs 14. Die Frischlufteinrichtung 10 ist in Fig. 4 mittels eines Druckluftanschlusses 25 an der Bedieneinheit 9, 18 montiert. Dieser Druckluftanschluss 25 kann als Schnellkupplung konfiguriert sein. Die Frischlufteinrichtung 10 aus Fig. 4 weist ein Kugelgelenk 26 auf, durch das die Halterung 22 mit dem Element 19 verbunden ist. Mittels des Kugelgelenks 26 kann der Fahrer F eine Feineinstellung für eine Ausrichtung des Elements 19 justieren.

Die Frischlufteinrichtung 10 aus Fig. 4, insbesondere dessen Halterung 22, kann durch den Fahrer F mühelos von der Bedieneinheit 9, 18 abmontiert werden. Vorstellbar wäre es, dass die Frischlufteinrichtung 10 aus Fig. 4 im Bereich der Halterung 22 mit einer vom Fahrer F bevorzugten Desodoriereinheit 27 verbindbar ist, um die Frischluft L mit einem vorbestimmten Duft zu versehen.

Weiter zeigt Fig. 4, dass die Frischlufteinrichtung 10 eine Lichtquelle 28 aufweist, die an der Halterung 22 befestigt ist. Die Lichtquelle 28 kann mittels einer durch die Halterung 22 geführten, nicht gezeigten, elektrischen Leitung mit Strom versorgt werden. Alternativ dazu ist die Lichtquelle 28 batteriebetrieben. Die Lichtquelle 28 kann dazu ausgebildet sein, in Abhängigkeit von einer am Fahrerbedienstand 8, 17 erfassten Luftqualität verschiedene Farben auszusenden, beispielsweise Grün, wenn die Luftqualität unkritisch ist, und Rot, wenn die Luft einen erhöhten Aerosolgehalt aufweist. Dafür kann die Lichtquelle 28 mit einer am Fahrerbedienstand 8, 17 installierten Sensoreinheit 29, 30 verbunden sein (siehe Fig. 1 und 2). Die Sensoreinheiten 29, 30 könnten auch als Bestandteil der jeweiligen Bedieneinheiten 9, 12, 18 vorliegen oder Bestandteil eines vom Fahrer oder Bediener getragenen Smart Device (z.B. VR-Brille, Smart Watch, Head-Set) sein.

Außerdem zeigt Fig. 4, dass die Bedieneinheit 9, 18 eine Gebläseeinrichtung 33 in dessen Eingabeoberfläche aufweist, die insbesondere zur Klimatisierung des Arbeitsplatzes dient.

Sämtliche technischen Merkmale, die in Zusammenhang mit der in Fig. 4 gezeigten Frischlufteinrichtung 10 vorangehend beschrieben wurden, können auch an einer am Außenbedienstand 11 des Straßenfertigers 1 montierten Bedieneinheit 12 und/oder Frischlufteinrichtung 13 vorliegen.

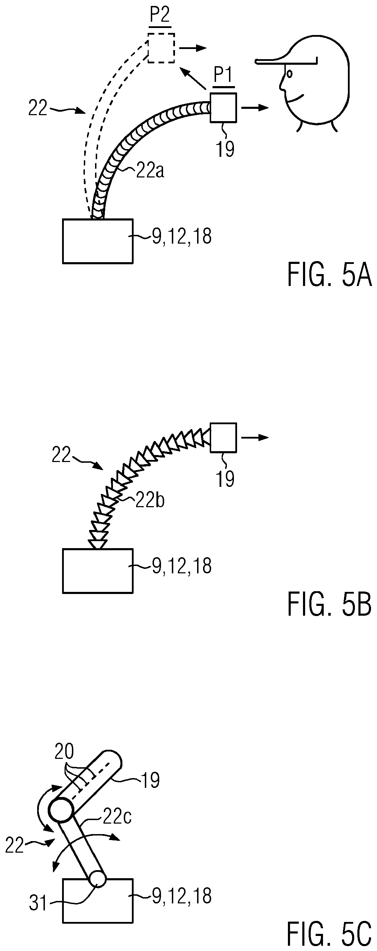

Die Fig. 5A, 5B und 5C zeigen verschiedene Ausführungsformen der Halterung 22, die dazu ausgebildet ist, das Element 19 derart zu tragen, dass dieses unkompliziert verstellbar ist, damit der Fahrer F oder Bediener gezielt mit Frischluft L im Bereich seiner Einatmung versorgbar ist.

In Fig. 5A ist die Halterung 22 als Schwanenhalshalterung 22a ausgebildet, so dass das Element 19 schnell und frei positionierbar ist, vom Fahrer F bzw. vom Bediener also individuell positioniert werden kann. Schematisch wird in Fig. 5A gezeigt, dass sich das Element 19 relativ zur Bedieneinheit 9, 12, 18 in verschiedene Positionen P1, P2 bringen lässt.

In Fig. 5B ist die Halterung 22 als Gelenkschlauchhalterung 22b ausgebildet. Sowohl die Schwanenhalshalterung 22a aus Fig. 5A als auch die Gelenkschlauchhalterung 22b aus Fig. 5B liegen in Form von halbsteifen, biegsamen Verbindungselementen vor, mittels derer sich das an deren Ende befestigte Element 19 vom Fahrer F bzw. vom Bediener frei positionieren lässt, damit die Versorgung der Frischluft L auf Höhe dessen Einatmung vorliegt.

Gemäß Fig. 5C ist die Halterung 22 als Schwenkarmhalterung 22c ausgebildet. Diese Schwenkarmhalterung 22c ist um eine Achse 31 schwenkbar an der Bedieneinheit 9, 12, 18 gelagert.

Ferner zeigt Fig. 5C, dass das Element 19 als röhrenförmige Düse mit mehreren Auslassöffnungen 20 vorliegt. Diese Düse kann gelenkig an der Schenkarmhalterung 22c befestigt sein.

Die beschriebenen Frischlufteinrichtungen 10, 13 können an den jeweiligen Bedieneinheiten 9, 12, 18 der Straßenbaumaschinen 100, 100b zumindest teilweise daran integriert ausgebildet oder zumindest teilweise als Nachrüstset lösbar daran befestigt sein. Sämtliche Frischlufteinrichtungen 10, 13 bilden kostengünstig herstellbare Module aus, die sich individuell vom Fahrer F bzw. vom Bediener einstellen lassen. Die beschriebenen Halterungen 22a, 22b, 22c ermöglichen es, dass das Element 19, aus welchem die Frischluft L strömt, frei positionierbar ist, so dass die Luftqualität unmittelbar im Bereich der Einatmung des Fahrers F bzw. des Bedieners verbessert werden kann. Aufgrund deren schlauchartigen Aufbaus werden durch die jeweiligen Frischlufteinrichtungen 10, 13 die Sichtverhältnisse des Fahrers F oder Bedieners nur unwesentlich beeinträchtigt.

## Patentansprüche

1. Bedieneinheit (9, 12, 18) für eine Straßenbaumaschine (100A, 100B) zum Steuern und Überwachen verschiedener Prozesse der Straßenbaumaschine (100A, 100B), **dadurch gekennzeichnet, dass** an der Bedieneinheit (9, 12 ,18) mindestens eine Frischlufteinrichtung (10, 13) lösbar befestigt ist, wobei die Frischlufteinrichtung (10. 13) mindestens ein Element (19) mit wenigstens einer Auslassöffnung (20) für Frischluft (L) und mindestens eine Halterung (22) für das Element (19) aufweist, welches mittels der Halterung (22) in verschiedene Positionen (P1, P2) relativ zu der Bedieneinheit (10, 13, 18) verstellbar ist.

2. Bedieneinheit nach Anspruch 1, **dadurch gekennzeichnet, dass** die Halterung (22) werkzeuglos und/oder manuell verstellbar ist.

3. Bedieneinheit nach Anspruch 1 oder 2, **dadurch gekennzeichnet, dass** die Halterung (22) mindestens eine mit dem Element (19) verbundene Frischluftleitung aufweist.

4. Bedieneinheit nach einem der vorangehenden Ansprüche, **dadurch gekennzeichnet, dass** die Halterung (22) zumindest abschnittsweise als Schwanenhalshalterung (22a) oder als Gelenkschlauchhalterung (22b) ausgebildet ist.

5. Bedieneinheit nach einem der vorangehenden Ansprüche, **dadurch gekennzeichnet, dass** die Halterung (22) als Schwenkarmhalterung (22c) vorliegt.

6. Bedieneinheit nach einem der vorangehenden Ansprüche, **dadurch gekennzeichnet, dass** die Halterung (22) und das Element (19) mittels eines Kugelgelenks (26) verbunden sind.

7. Bedieneinheit nach einem der vorangehenden Ansprüche, **dadurch gekennzeichnet, dass** das Element (19) und/oder die Halterung (22) mindestens eine Lichtquelle (28) aufweist.

8. Bedieneinheit nach einem der vorangehenden Ansprüche, **dadurch gekennzeichnet, dass** das Element (19) als Düse und/oder als Diffusor ausgebildet ist.

9. Bedieneinheit nach einem der vorangehenden Ansprüche, **dadurch gekennzeichnet, dass** die Frischlufteinrichtung (10, 13) mindestens eine Kühl- und/oder Luftbefeuchtungseinheit (24) aufweist.

10. Bedieneinheit nach einem der vorangehenden Ansprüche, **dadurch gekennzeichnet, dass** die Frischlufteinrichtung (10, 13) mindestens eine Filtereinheit (23) und/oder Desodoriereinheit (27) aufweist.

11. Bedieneinheit nach einem der vorangehenden Ansprüche, **dadurch gekennzeichnet, dass** die Frischlufteinrichtung (10, 13) als Nachrüstset für die Straßenbaumaschine (100A, 100B) vorliegt und/oder mindestens eine Sensoreinheit (29, 30) zum Messen einer Luftqualität der Frischluft (L) umfasst.

12. Bedieneinheit nach einem der vorangehenden Ansprüche, **dadurch gekennzeichnet, dass** die Frischlufteinrichtung (10, 13) einen Drucklufterzeuger (21) umfasst.

13. Bedieneinheit nach einem der vorangehenden Ansprüche, **dadurch gekennzeichnet, dass** die Bedieneinheit (9, 12, 18) eine von der Frischlufteinrichtung (10, 13) gesondert ausgebildete Gebläseeinrichtung (33) aufweist.

14. Straßenbaumaschine (100A, 100B), insbesondere Straßenfertiger (1) oder Beschicker (14) für einen Straßenfertiger (1), umfassend mindestens eine Bedieneinheit (9, 12, 18) gemäß einem der vorangehenden Ansprüche.

## Claims

1. Control unit (9, 12, 18) for a road making machine (100A, 100B) for controlling and monitoring various processes of the road making machine (100A, 100B), **characterized in that** at least one fresh air device (10, 13) is detachably fastened to the control unit (9, 12, 18), wherein the fresh air device (10, 13) comprises at least one element (19) with at least one outlet opening (20) for fresh air (L) and at least one holder (22) for the element (19), which is adjustable into different positions (P1, P2) relative to the control unit (10, 13, 18) by means of the holder (22).

2. Control unit according to claim 1, **characterized in that** the holder (22) is adjustable without tools and/or manually.

3. Control unit according to claim 1 or 2, **characterized in that** the holder (22) includes at least one fresh air line connected with the element (19).

4. Control unit according to one of the preceding claims, **characterized in that** the holder (22) is designed, at least in sections, as a gooseneck holder (22a) or as a joint hose holder (22b).

5. Control unit according to one of the preceding claims, **characterized in that** the holder (22) is present as a swivel arm holder (22c).

6. Control unit according to one of the preceding claims, **characterized in that** the holder (22) and the element (19) are connected by means of a ball and socket joint (26).

7. Control unit according to one of the preceding claims, **characterized in that** the element (19) and/or the holder (22) includes at least one light source (28).

8. Control unit according to one of the preceding claims, **characterized in that** the element (19) is designed as a nozzle and/or a diffuser.

9. Control unit according to one of the preceding claims, **characterized in that** the fresh air device (10, 13) includes at least one cooling and/or air humidification unit (24).

10. Control unit according to one of the preceding claims, **characterized in that** the fresh air device (10, 13) includes at least one filter unit (23) and/or deodorizing unit (27).

11. Control unit according to one of the preceding claims, **characterized in that** the fresh air device (10, 13) is present as an add-on kit for the road making machine (100A, 100B), and/or comprises at least one sensor unit (29, 30) for measuring an air quality of the fresh air (L).

12. Control unit according to one of the preceding claims, **characterized in that** the fresh air device (10, 13) comprises an air compressor (21).

13. Control unit according to one of the preceding claims, **characterized in that** the control unit (9, 12, 18) includes a blower device (33) embodied separately from the fresh air device (10, 13).

14. Road making machine (100A, 100B), in particular road finishing machine (1) or charger (14) for a road finishing machine (1), comprising at least one control unit (9, 12, 18) according to one of the preceding claims.

## Revendications

1. Unité de commande (9, 12, 18) destinée à une machine de construction routière (100A, 100B) et permettant de commander et surveiller différents procédés de la machine de construction routière (100A, 100B), **caractérisée en ce qu'**au moins un dispositif d'air frais (10, 13) est fixé de manière amovible à l'unité de commande (9, 12, 18), dans lequel le dispositif d'air frais (10, 13) présente au moins un élément (19) comprenant au moins un orifice de sortie (20) pour l'air frais (L) et au moins un support (22) destiné à l'élément (19) qui peut être réglé dans différentes positions (P1, P2) par rapport à l'unité de commande (10, 13, 18) au moyen du support (22).

2. Unité de commande selon la revendication 1, **caractérisée en ce que** le support (22) peut être réglé sans outil et/ou manuellement.

3. Unité de commande selon la revendication 1 ou 2, **caractérisée en ce que** le support (22) présente au moins une conduite d'air frais reliée à l'élément (19).

4. Unité de commande selon l'une quelconque des revendications précédentes, **caractérisée en ce que** le support (22) est réalisé au moins par sections sous la forme d'un support à col de cygne (22a) ou sous la forme d'un support à tube flexible articulé (22b).

5. Unité de commande selon l'une quelconque des revendications précédentes, **caractérisée en ce que** le support (22) est réalisé sous la forme d'un support à bras pivotant (22c).

6. Unité de commande selon l'une quelconque des revendications précédentes, **caractérisée en ce que** le support (22) et l'élément (19) sont reliés au moyen d'une articulation à rotule (26).

7. Unité de commande selon l'une quelconque des revendications précédentes, **caractérisée en ce que** l'élément (19) et/ou le support (22) présente au moins une source lumineuse (28).

8. Unité de commande selon l'une quelconque des revendications précédentes, **caractérisée en ce que** l'élément (19) est réalisé sous forme d'une buse et/ou d'un diffuseur.

9. Unité de commande selon l'une quelconque des revendications précédentes, **caractérisée en ce que** le dispositif d'air frais (10, 13) présente au moins une unité de refroidissement et/ou d'humidification d'air (24).

10. Unité de commande selon l'une quelconque des revendications précédentes, **caractérisée en ce que** le dispositif d'air frais (10, 13) présente au moins une unité de filtration (23) et/ou de désodorisation (27).

11. Unité de commande selon l'une quelconque des revendications précédentes, **caractérisée en ce que** le dispositif d'air frais (10, 13) se présente sous la forme d'un kit d'évolution pour la machine de construction routière (100A, 100B) et/ou comprend au moins une unité de capteur (29, 30) permettant de mesurer une qualité d'air de l'air frais (L).

12. Unité de commande selon l'une quelconque des revendications précédentes, **caractérisée en ce que** le dispositif d'air frais (10, 13) comprend un générateur d'air comprimé (21).

13. Unité de commande selon l'une quelconque des revendications précédentes, **caractérisée en ce que** l'unité de commande (9, 12, 18) présente un dispositif de ventilateur (33) réalisé séparément du dispositif d'air frais (10, 13).

14. Machine de construction routière (100A, 100B), en particulier finisseur routier (1) ou alimentateur (14) pour un finisseur (1), comprenant au moins une unité de commande (9, 12, 18) selon l'une quelconque des revendications précédentes.
